# EUROPÄISCHE PATENTSCHRIFT

(11) **EP 3 751 067 B1**
(45) Veröffentlichungstag und Bekanntmachung des Hinweises auf die Patenterteilung: **25.05.2022**
(21) Anmeldenummer: 20177898.2
(22) Anmeldetag: 02.06.2020
(51) Int. Cl.: E03F 5/14, E03F 5/10, B01D 21/00

(54) **ROHRSEDIMENTATIONSANLAGE**
PIPE SEDIMENTATION SYSTEM
SYSTÈME DE DIMENSIONNEMENT DE TUYAUX

(30) Priorität: 03.06.2019 DE 202019103099 U
(43) Veröffentlichungstag der Anmeldung: 16.12.2020
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Habbel, Ludwig

(56) Entgegenhaltungen:
- EP-A2- 1 731 682
- DE-U1-202007 011 126
- US-A1- 2006 157 405

## Beschreibung

Die Erfindung betrifft eine Rohrsedimentationsanlage nach dem Oberbegriff des Anspruchs 1.

Aus der DE 20 2007 011 126 U1 ist eine derartige Rohrsedimentationsanlage bekannt.

Wenn Oberflächenwasser, beispielsweise von einer asphaltierten Fläche eines Parkplatzes, in eine Filtereinrichtung eingeleitet wird, beispielsweise in eine mit einem Filtersubstrat gefüllten Rinne, können etwa 95 % der im Wasser enthaltenen AFS aus dem Wasser herausgefiltert werden. Bei den AFS, also den abfiltrierbaren Stoffen, handelt es sich um Sink-, Schweb- und Schwimmstoffe.

Die DE 20 2017 101 779 U1 und die DE 20 2018 101 707 U1 beschreiben jeweils einen Sedimentationsschacht. In die jeweils aufrecht ausgerichteten Schachtbauwerke kann Oberflächenwasser einströmen. Im Unterschied zu einer Filtration werden AFS durch Sedimentation aus dem Wasser abgeschieden. Hierdurch wird ein geringerer Abscheidegrad, aber eine deutlich höhere hydraulische Leistung, also die Behandlung einer größeren Wassermenge pro Zeiteinheit, ermöglicht.

Aus der US 6 062 767 A ist eine Sedimentationsanlage mit einem quaderförmigen mineralischen Sedimentationsbecken bekannt, das insbesondere zum Trennen von Streugut und Öl aus Niederschlagswasser dient.

In der Natur scheint die Tendenz zu beobachten zu sein, dass extreme Wetterlagen häufiger auftreten und / oder sich über eine längere Zeit halten, als dies in früheren Jahrzehnten zu beobachten war. Bezogen auf das Aufkommen von Oberflächenwasser bedeutet dies, dass häufiger mit Großniederschlagsereignissen gerechnet werden muss, die eine kurzzeitige, sehr große Menge von Oberflächenwasser verursachen. Je nach den örtlichen Bedingungen kann hinzukommen, dass die Versiegelung von Bodenflächen in unmittelbarer Nachbarschaft einer bestimmten, zu behandelnden Oberfläche dazu beiträgt, dass das auf den benachbarten Bodenflächen aufkommende Oberflächenwasser ggf. nicht ausreichend schnell abgeführt und jedenfalls nicht mehr unmittelbar versickern kann, so dass zusätzlich zu der Niederschlagsbelastung der bestimmten, zu behandelnden Oberfläche auch noch Wassermengen von den benachbarten Bodenflächen diese zu behandelnde Bodenfläche belasten.

Der Erfindung liegt die Aufgabe zugrunde, eine Rohrsedimentationsanlage anzugeben, die eine Sedimentationsbehandlung von Oberflächenwasser auch für große Bodenflächen wirtschaftlich ermöglicht und dabei eine möglichst hohe Abscheideleistung gewährleistet.

Diese Aufgabe wird durch eine Rohrsedimentationsanlage nach Anspruch 1 gelöst. Vorteilhafte Ausgestaltungen sind in den Unteransprüchen beschrieben.

Die Erfindung schlägt mit anderen Worten vor, nach wie vor einen Schacht zu verwenden, für die Sedimentation jedoch statt eines aufrechten Schachtbauwerkes eine liegend angeordnete, als Rohr ausgestalteten Sedimentationskammer zu verwenden.

Der Schacht dient dazu, für Wartungsarbeiten einen Zugang zu der Sedimentationskammer zu schaffen. Die Sedimentationskammer weist eine Einlassöffnung auf, die innerhalb des Schachtes angeordnet ist, so dass beispielsweise die Sedimentationskammer gespült werden kann und hierzu vom Schacht her ein Zugang ermöglicht wird, durch welchen ein Spülwerkzeug wie ein Schlauch, eine Spüllanze oder dergleichen durch die Einlassöffnung in die Sedimentationskammer eingebracht werden kann.

Die Einlassöffnung ist nahe einem ersten Ende der Sedimentationskammer angeordnet, während eine Austrittsöffnung für das Reinwasser nahe einem zweiten, gegenüberliegenden Ende der Sedimentationskammer angeordnet ist, so dass durch eine möglichst gute Ausnutzung der Länge der Sedimentationskammer eine möglichst lange Verweildauer des Wassers in der Sedimentationskammer gewährleistet ist und dadurch die Abscheideleistung optimiert wird. Die Austrittsöffnung befindet sich in der oberen Umfangshälfte der rohrförmigen Sedimentationskammer, und vorteilhaft oben auf dem bzw. im Scheitel der Sedimentationskammer. Auf diese Weise ist gewährleistet, dass ein möglichst großes Fassungsvermögen des Rohrs als Sedimentationskammer genutzt werden kann und der Austritt des Reinwassers in einem möglichst großen Höhenabstand von den Sedimenten erfolgt, so dass strömungsbedingte Verwirbelungen der Sedimente möglichst vermieden werden.

Die liegende Anordnung der Sedimentationskammer wirkt sich in mehrfacher Hinsicht vorteilhaft aus: erstens kann auf einfache Weise durch unterschiedliche Rohrlängen eine Anpassung an unterschiedlich große Flächen erfolgen, deren Oberflächenwasser in der Rohrsedimentationsanlage behandelt werden soll. Zweitens kann besonders wirtschaftlich, verglichen mit einem vertikal ausgerichteten Schachtbauwerk, ein vergleichsweise langes Rohr verwendet werden, da die Installationskosten nicht durch eine entsprechend tiefe Baugrube beeinflusst werden, die zur Aufnahme eines entsprechend hohen Schachtbauwerks erforderlich wäre, sondern es muss lediglich ein vergleichsweise flacher und ausreichend langer Graben bereitgestellt werden, um die Rohrsedimentationsanlage aufzunehmen. Drittens kann für die Sedimentationskammer jeweils ein vergleichsweise langes Rohr ohne größere wirtschaftliche Nachteile verwendet werden, so dass eine besonders hohe Abscheideleistung gewährleistet werden kann.

Die Sedimentationskammer dient insbesondere dazu, vergleichsweise feine AFS abzuscheiden, beispielsweise bis zu einer Feinheit von 63 µm. Gröbere AFS, bis zu einer Feinheit von 1,5 mm, werden in einer vorschlagsgemäß vorgesehenen Kammer aus dem in die Rohrsedimentationsanlage einströmenden Rohwasser abgeschieden, wobei diese Kammer als Vorkammer bezeichnet ist und der Sedimentationskammer in Strömungsrichtung vorgeschaltet ist. Das Rohwasser gelangt durch einen Rohwassereinlass in die Vorkammer, und während der Verweilzeit in der Vorkammer können die gröberen AFS sedimentieren und sich am Boden der Vorkammer absetzen.

Die Vorkammer ist von der Sedimentationskammer durch eine Trennwand abgetrennt. Ein Strömungskanal verläuft über die Trennwand hinweg zur Einlassöffnung der Sedimentationskammer. Wenn der Wasserstand in der Vorkammer entsprechend hoch angestiegen ist, kann das Wasser durch den Strömungskanal aus der Vorkammer in die Sedimentationskammer gelangen.

Die Einlassöffnung der Sedimentationskammer ist mittels einer Klappe verschließbar. Bei einem Großniederschlagsereignis kann so eine zu starke Durchströmung der Sedimentationskammer verhindert werden, die ähnlich wie eine Durchspülung zu Wartungszwecken die in der Sedimentationskammer abgelagerten Sedimente aus der Rohrsedimentationsanlage herauszuspülen drohen würde. Die Funktion der Klappe wird vorschlagsgemäß auf einfache Weise und vollautomatisch dadurch gewährleistet, dass die Klappe mit einem Schwimmer versehen ist. Ein ansteigender Wasserpegel innerhalb der Rohrsedimentationsanlage bewirkt dabei ab einem bestimmten Pegelstand, dass der Schwimmer die Klappe aus ihrer zunächst offenen Stellung in ihre Schließstellung führt und auf diese Weise die Einlassöffnung der Sedimentationskammer geschlossen wird.

In an sich bekannter Weise können dabei unterschiedliche Funktionsprinzipien genutzt werden: beispielsweise kann unmittelbar an der Klappe ein Schwimmer angeordnet sein, oder die Klappe kann durch entsprechende Hohlräume bzw. durch Verwendung eines entsprechenden Werkstoffs, z.B. Schaumwerkstoffs, selbst als Auftriebskörper dienen. In diesem Fall nimmt die Klappe eine nach unten hängende Offenstellung ein und wird mit steigendem Wasserpegel nach oben in ihre Schließstellung bewegt. Umgekehrt kann, ähnlich wie dies von WC-Spülkästen bekannt ist, mittels einer Hebelanordnung eine kinematische Umkehr erreicht werden, so dass bei steigendem Wasserpegel der am Hebel angeordnete, ebenfalls aufsteigende Schwimmer die am anderen Ende des Hebels befindliche Klappe nach unten in die Schließstellung führt. Zudem kann eine Hebelanordnung unabhängig davon verwendet werden, ob die Klappe nach oben oder nach unten in ihre Schließstellung geführt wird, indem mittels der Hebelanordnung jedenfalls die Schließkraft im Vergleich zur Auftriebskraft des Schwimmers entsprechend dem Hebelverhältnis vergrößert werden kann.

Vorteilhaft kann im Falle eines Großniederschlagsereignisses nicht nur die Eintrittsöffnung der Sedimentationskammer verschlossen werden, sondern auch ein Bypass geschaffen werden, so dass sich die anfallenden Wassermengen nicht zurückstauen und die zu entwässernde Bodenfläche unter Wasser setzen. Daher kann vorteilhaft ein als Rohrleitung ausgestalteter Überlauf vorgesehen sein, der an den Schacht anschließt und an der Austrittsöffnung der Sedimentationskammer vorbei zu einem Auslass der Rohrsedimentationsanlage verläuft. Durch die dortige Mündungsöffnung des Überlaufs gelangt das Wasser aus der Rohrsedimentationsanlage, ohne die Sedimentationskammer durchströmt zu haben. Vorteilhaft kann jedoch auch die Austrittsöffnung der Sedimentationskammer an den Überlauf anschließen, so dass auch im Normalbetrieb das aus der Sedimentationskammer herausströmende Wasser in den letzten Abschnitt des Überlaufs und von dort zu dem Auslass gerät. Auf diese Weise wird die Installation der Rohrsedimentationsanlage besonders einfach ermöglicht, indem lediglich ein einziger Anschluss für das aus der Rohrsedimentationsanlage austretende Wasser bereitgestellt zu werden braucht. Der Überlauf schließt oberhalb der Einlassöffnung an den Schacht an. Im Normalbetrieb strömt daher das Wasser aus der Vorkammer in die Einlassöffnung der Sedimentationskammer. Nur wenn im Fall eines Großniederschlagsereignisses die Eintrittsöffnung der Sedimentationskammer geschlossen wird, steigt das Wasser im Schacht so hoch auf, dass es in den Überlauf gelangt und von dort unter Umgehung der Sedimentationskammer zum Auslass der Rohrsedimentationsanlage strömt.

Vorteilhaft kann der Überlauf im Abstand oberhalb von der Einlassöffnung an den Schacht anschließen und dabei vorgesehen sein, dass der Schwimmer oberhalb der Klappe angeordnet ist und die Klappe aus ihrer abgesenkten Offenstellung bei entsprechendem Wasserpegel in ihre angehobene Schließstellung führt. Dadurch, dass der Überlauf im Abstand oberhalb von der Einlassöffnung an den Schacht anschließt, wird ein Bewegungsraum für den Schwimmer unterhalb dieser Mündung des Überlaufs geschaffen. Bevor bei einem Großniederschlagsereignis Wasser in den Überlauf gelangen kann, steigt der Wasserpegel in der Sedimentationskammer, und wenn deren hydraulische Leistungsfähigkeit überschritten wird steigt der Wasserpegel weiterhin im Schacht an. Hierdurch wird der Schwimmer angehoben und mittels des Schwimmers die Klappe nach oben in ihre Schließstellung geführt.

Durch die Anordnung des Schwimmers oberhalb der Klappe kann das Innenvolumen der Sedimentationskammer möglichst vollständig genutzt werden. Eine Alternative kann darin bestehen, den Schwimmer unterhalb der Klappe anzuordnen oder die Klappe selbst als Schwimmer auszugestalten. In diesem Fall kann der Überlauf ohne nennenswerten Abstand oberhalb der in die Sedimentationskammer führenden Einlassöffnung an den Schacht anschließen.

Die Trennwand zwischen der Vorkammer und der Sedimentationskammer kann sich vorteilhaft in Beziehungsweise unterhalb des Schachtes befinden. Hierdurch kann gewährleistet werden, dass vom Schacht aus ein Zugriff sowohl in die Vorkammer als auch in die Sedimentationskammer erfolgen kann, so dass beide Kammern zu Wartungszwecken erreichbar sind. Dementsprechend verläuft der Strömungskanal von der Vorkammer durch den Schacht, über die Trennwand hinweg, und in die Sedimentationskammer.

Vorteilhaft kann in der Vorkammer ein Ablenkkörper angeordnet sein. Dieser befindet sich zwischen dem Rohwassereinlass und dem Strömungskanal, durch welchen das vorgereinigte Wasser die Vorkammer verlässt. Dabei ist vorgesehen, dass sich der Ablenkkörper im Abstand von dem Rohwassereinlass befindet. Bei geringen Strömungsgeschwindigkeiten gelangt das Wasser vom Rohwassereinlass daher nicht gegen den Ablenkkörper, sondern strömt nach unten in die Vorkammer. Bei höheren Strömungsgeschwindigkeiten jedoch, wie im Falle von Großniederschlagsereignissen, überbrückt das einströmende Rohwasser den Abstand und prallt gegen den Ablenkkörper. Dabei ist vorgesehen, dass der Ablenkkörper eine Lenkfläche aufweist, die das einströmende Rohwasser zum Strömungskanal lenkt. Auf diese Weise wird angesichts der hohen Strömungsgeschwindigkeiten, die bei einem Großniederschlagsereignis auftreten, eine Verwirbelung in der Vorkammer weitgehend vermieden. Bereiche, die sich unterhalb oder hinter dem Ablenkkörper befinden und in denen sich gröbere AFS abgelagert haben, werden dementsprechend möglichst geringfügig durchströmt. Hierdurch wird vermieden, dass die abgelagerten AFS aufgewirbelt und durch den Überlauf ausgetragen werden.

Vorteilhaft kann die Rohrsedimentationsanlage als Einzelschachtanlage ausgestaltet sein und nur den bereits erwähnten Schacht als einzigen Schacht aufweisen. Hierdurch werden die Installationskosten minimiert und Störungen im Betrieb weniger wahrscheinlich, beispielsweise Störungen, die sich durch Klappergeräusche, Setzungen oder dergleichen im Bereich der Schachtdeckel im Laufe der Nutzung ergeben können und die Wartungsarbeiten oder Nachbesserungen erforderlich machen können.

Vorteilhaft kann der Einlassöffnung der Sedimentationskammer in Strömungsrichtung ein Laubfanggitter vorgeschaltet sein. Das Laub von kann insbesondere vorteilhaft im Schacht angeordnet sein, beispielsweise in dem Strömungskanal, durch den das Wasser von der Vorkammer in die Sedimentationskammer strömt. Oder das Laubfanggitter kann unterhalb des Schachtes angeordnet sein, beispielsweise in dem unterhalb des Schachtes befindlichen Bereich der Vorkammer. Durch den Schacht ist in diesen beschriebenen Fällen ein problemloser Zugang zum Laubfanggitter möglich, so dass dieses im Rahmen von Wartungsarbeiten gereinigt werden kann.

Um die durch den Schacht hindurch möglichen Wartungsarbeiten zu vereinfachen, können die Klappe und der Schwimmer Bestandteile eines aus dem Schacht nach oben herausnehmbaren Einsatzes sein. Der Einsatz ist als Deckel ausgestaltet, der eine Wartungsöffnung der Sedimentationskammer verschließt, so dass er einfach nach oben abgenommen werden kann.

Um diesen Einsatz möglichst einfach vor der Wartung sowie nach erfolgter Wartung demontieren bzw. wieder montieren zu können, kann vorteilhaft vorgesehen sein, dass der Einsatz ein so großes Eigengewicht aufweist, dass er unter Verzicht auf Befestigungs- bzw. Verschlusselemente montiert werden kann und lediglich aufgrund seines Eigengewichtes stabil auf dem Rand der Wartungsöffnung aufliegt.

Dabei kann vorteilhaft vorgesehen sein, dass der Einsatz über der Wartungsöffnung verschiebesicher fixiert ist. Hierzu kann der Einsatz vorteilhaft entlang seines Umfangs mit Führungselementen zusammenwirken, die ihn gegen eine Verschiebung in liegender Richtung sichern. Beispielsweise kann vorgesehen sein, dass sich der Einsatz teilweise in die Wartungsöffnung hinein erstreckt, so dass die Umrandung der Wartungsöffnung als Führungselement dient.

In einer Ausgestaltung kann beispielsweise vorgesehen sein, dass der Einsatz von innen mit einer entsprechend gebogenen Kontur an der Schachtwandung anliegt. Weiterhin kann er einen nach unten ragenden Anschlag aufweisen, der sich durch die Wartungsöffnung in die Sedimentationskammer erstreckt. Die Schachtwandung und die Umrandung der Wartungsöffnung wirken so als Führungselemente mit dem Einsatz zusammen.

In einer Ausgestaltung kann vorgesehen sein, dass die Sedimentationskammer möglichst weitgehend frei von Einbauten ist. Hierdurch werden Verwirbelungen in der Sedimentationskammer vermieden. Außerdem wird eine Spülung der Sedimentationskammer in diesem Fall nicht durch die Einbauten beeinträchtigt, welche ggf. eine Abschattung der Spülstrahlen bewirken können. In einer anderen Ausgestaltung kann allerdings vorgesehen sein, in der Sedimentationskammer eine Schwallwand anzuordnen. Durch eine Schwallwand kann der Innenraum der Sedimentationskammer in zwei Bereiche unterteilt werden, so dass Strömungen, die in einem ersten Bereich der Sedimentationskammer auftreten, den zweiten Bereich möglichst geringfügig beeinflussen und auf diese Weise die Abscheideleistung der Sedimentationskammer verbessert werden kann. Insbesondere können zwei oder mehr derartige Schwallwände vorgesehen sein.

Ein Ausführungsbeispiel der Erfindung wird anhand der rein schematischen Darstellungen nachfolgend näher erläutert dabei zeigt
- Fig. 1: eine Draufsicht auf eine Rohrsedimentationsanlage,
- Fig. 2: einen Schnitt entlang der Linie A - A von Fig. 1,
- Fig. 3: eine Ausschnittsvergrößerung aus Fig. 2 aus dem Bereich der Einlassöffnung der Sedimentationskammer, und
- Fig. 4: eine Ansicht ähnlich Fig. 3, wobei die Einlassöffnung geschlossen ist.

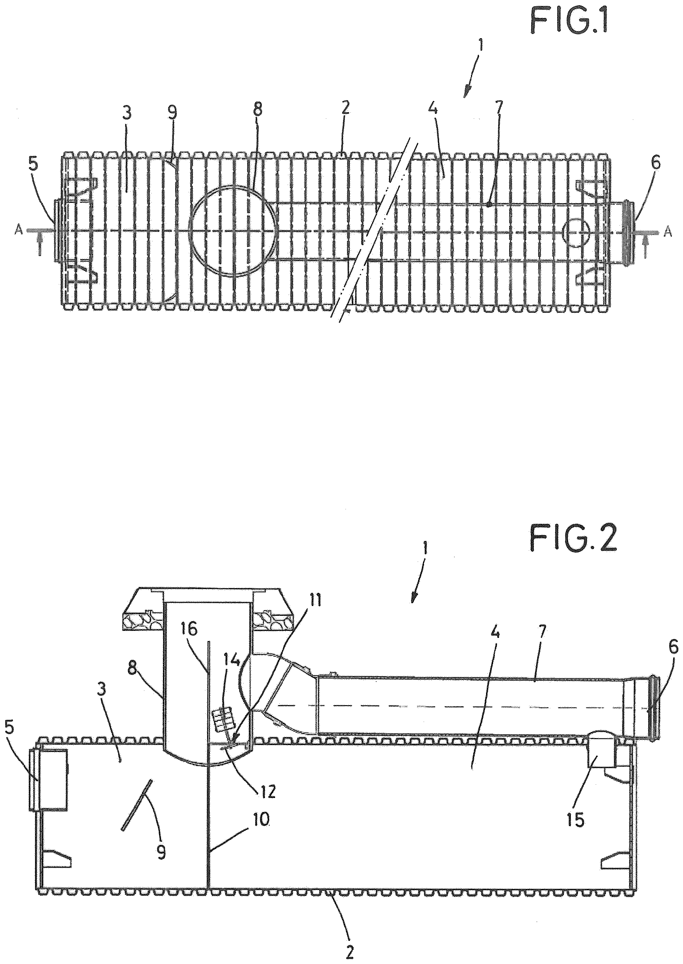

Fig. 1 zeigt eine Rohrsedimentationsanlage 1. Ein Wellrohr 2 bildet eine Vorkammer 3 und eine Sedimentationskammer 4. An dem links dargestellten Ende ist ein Rohwassereinlass 5 vorgesehen, durch welchen mit Partikeln belastetes Rohwasser in die Vorkammer 3 einströmen kann. Am gegenüberliegenden Ende verlässt das Wasser die Rohrsedimentationsanlage 1 durch einen Auslass 6. Der Auslass 6 stellt die Ausströmöffnung einer Rohrleitung dar, die einen Überlauf 7 bildet, und deren Einströmöffnung am gegenüberliegenden Ende vorgesehen ist, wo die Rohrleitung an einen Schacht 8 anschließt.

Fig. 2 zeigt, dass der Rohwassereinlass 5 das einströmende Rohwasser in den oberen Bereich der Vorkammer 3 führt, so dass sich gröbere Partikel in der Vorkammer 3 nach unten absetzen können. Bei höheren Strömungsgeschwindigkeiten gerät das einströmende Rohwasser gegen einen Ablenkkörper 9, der als schräg aufwärtsgerichtete Prallplatte ausgestaltet ist. Wenn die Vorkammer 3 gefüllt ist, steigt das Wasser im Bereich der Vorkammer 3 in den Schacht 8. Dabei erstreckt sich eine Trennwand 10, welche die Vorkammer 3 von der Sedimentationskammer 4 trennt, ebenfalls bis in den Schacht 8 hinein. Innerhalb des Schachtes 8 ist die Vorkammer 3 nach oben hin offen, so dass innerhalb des Schachtes 8 ein Strömungskanal geschaffen wird, durch welchen der ansteigende Wasserpegel über die Trennwand 10 und in eine Einlassöffnung 11 der Sedimentationskammer 4 strömen kann. Die Einlassöffnung 11 befindet sich nahe einem ersten, links dargestellten Ende der Sedimentationskammer 4 und kann von einer Klappe 12 verschlossen werden, die sich in Fig. 2 in ihrer nach unten hängenden Offenstellung befindet. Die Klappe 12 ist mit einem Schwimmer 14 verbunden, so dass sie bei im Schacht 8 ansteigendem Wasserpegel automatisch mittels des Schwimmers 14 nach oben in ihre Schließstellung geführt wird.

Im Normalbetrieb der Rohrsedimentationsanlage 1, wie er in Fig. 2 dargestellt ist, strömt das in der Vorkammer 3 vorgereinigte Wasser bei offen stehender Klappe 12 durch die Einlassöffnung 11 in die Sedimentationskammer 4. Aufgrund der Länge der Sedimentationskammer 4 und der Anordnung einer Austrittsöffnung 15 am gegenüberliegenden Ende wird eine maximale Verweildauer des Wassers in der Sedimentationskammer 4 erreicht, so dass sich auch feinere Partikel absetzen können. Durch die Austrittsöffnung 15 gelangt das gereinigte Wasser in den letzten Abschnitt des Überlaufs 7, so dass es die Rohrsedimentationsanlage 1 durch den Auslass 6 verlässt.

Fig. 2 zeigt weiterhin, dass der Überlauf 7 grundsätzlich auf dem Wellrohr 2 verläuft, wenn auch mit einem geringen Gefälle zum Auslass 6 hin. Zum Schacht 8 hin jedoch verläuft der Überlauf 7 stark aufwärts, so dass die Einströmöffnung des Überlaufs 7 im Abstand oberhalb des Wellrohrs 2 und insbesondere im Abstand oberhalb von der Einlassöffnung 11 an den Schacht 8 anschließt. Und in Fig. 2 ist innerhalb des Schachtes 8 ein Laubfanggitter 16 erkennbar, welche sich durch den Strömungskanal erstreckt und in Verlängerung der Trennwand 10 angeordnet ist.

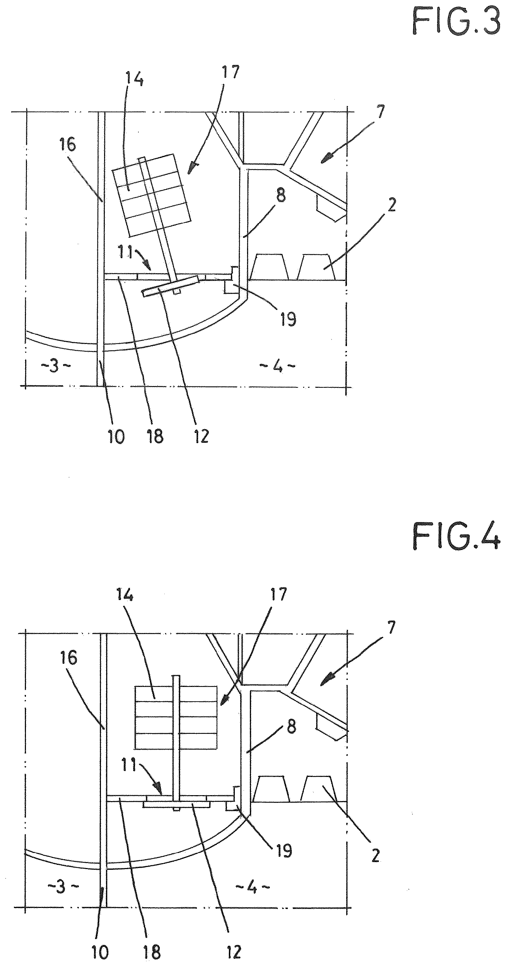

In Fig. 3 ist der Bereich der Einlassöffnung 11 im Vergleich zu Fig. 2 in einem größeren Maßstab dargestellt. Die Einlassöffnung 11, die Klappe 12 und der Schwimmer 14 sind Bestandteile eines Einsatzes 17, wobei die Einlassöffnung als Ausschnitt innerhalb einer Platte 18 ausgestaltet ist. Die Platte 18 kann durch ihr Gewicht zusammen mit den anderen Bestandteilen dem Einsatz 17 ein so hohes Eigengewicht vermitteln, dass der Einsatz 17 ohne weitere Befestigungselemente stabil seine Position beibehält. Abweichend von dem dargestellten Ausführungsbeispiel kann allerdings auch vorgesehen sein, dass von der Platte 18 ein Gewicht bis in die Sedimentationskammer 4 herabhängt und die Platte 18 - und damit der gesamte Einsatz 17 - hierdurch in Position gehalten wird. An der Platte 18 oder besonders vorteilhaft am oberen Ende des Schwimmers 14 kann eine in der Zeichnung nicht dargestellte Ringöse vorgesehen sein, um den gesamten Einsatz 17 von oben mit einem Haken erfassen und nach oben aus dem Schacht 8 herausheben zu können. Die Platte 18 verschließt eine Wartungsöffnung, so dass nach Entnahme des Einsatzes 17 ein Zugang in das Innere der Sedimentationskammer 4 besteht, um z. B. die Sedimente entfernen zu können.

Die Klappe 12 ist bei dem dargestellten Ausführungsbeispiel an die Platte 18 mittels eines Scharniers angeschlossen. Weiterhin ist bei dem dargestellten Ausführungsbeispiel vorgesehen, dass die Platte 18 auf einem im Schacht 8 innen umlaufenden Kragen 19 aufliegt sowie auf der Trennwand 10, so dass der Einsatz 17 verschiebesicher festgelegt ist.

Fig. 4 zeigt in einer Ansicht ähnlich der Fig. 3 die Einlassöffnung im verschlossenen Zustand: beispielsweise aufgrund eines Großniederschlagsereignisses ist der Wasserpegel zunächst in der Sedimentationskammer 4 aufgrund einer Überschreitung von deren hydraulischer Leistungsfähigkeit so weit angestiegen, dass auch im Schacht 8 der Wasserpegel über das Wellrohr 2 hinaus gestiegen ist. In dem Bereich, in dem der Wasserpegel die Einlassöffnung 11 übersteigt, aber noch nicht die Einströmöffnung des Überlauf 7 erreicht, wird der Schwimmer 14 durch den ansteigenden Wasserpegel angehoben und führt dabei die Klappe 12 aufwärts in ihre Schließstellung, in welcher diese die Einlassöffnung 11 der Sedimentationskammer 4 verschließt. Das erwähnte Großniederschlagsereignis mit seinen hohen Strömungsgeschwindigkeiten führt daher nicht zu einer Durchströmung der Sedimentationskammer 4, so dass eine Verwirbelung der dort abgelagerten Sedimente vermieden wird.

### Bezugszeichen:

- 1: Rohrsedimentationsanlage
- 2: Wellrohr
- 3: Vorkammer
- 4: Sedimentationskammer
- 5: Rohwassereinlass
- 6: Auslass
- 7: Überlauf
- 8: Schacht
- 9: Ablenkkörper
- 10: Trennwand
- 11: Einlassöffnung
- 12: Klappe
- 14: Schwimmer
- 15: Austrittsöffnung
- 16: Laubfanggitter
- 17: Einsatz
- 18: Platte
- 19: Kragen

## Patentansprüche

1. Rohrsedimentationsanlage (1),
mit einem von oben zugänglichen Schacht (8), und mit einer liegend angeordneten, als Rohr ausgestalteten Sedimentationskammer (4),
einer Einlassöffnung (11), die innerhalb des Schachtes (8) und nahe einem ersten Ende der Sedimentationskammer (4) in diese mündet,
einer Austrittsöffnung (15), die nahe einem zweiten Ende der Sedimentationskammer (4) in deren oberer Umfangshälfte angeordnet ist,
**dadurch gekennzeichnet,**
**dass** der Sedimentationskammer (4) eine Vorkammer (3) vorgeschaltet ist,
die einen Rohwassereinlass (5) aufweist und mittels einer Trennwand (10) von der Sedimentationskammer (4) abgetrennt ist,
wobei ein Strömungskanal über die Trennwand (10) zu der
Einlassöffnung (11) der Sedimentationskammer (4) verläuft und die Einlassöffnung (11) mittels einer Klappe (12) wahlweise verschließbar ist,
und wobei die Klappe (12) mit einem Schwimmer (14) versehen ist, derart, dass sie bei einem ansteigenden Wasserpegel automatisch ihre Schließstellung einnimmt.

2. Rohrsedimentationsanlage nach Anspruch 1,
**gekennzeichnet durch** einen als Rohrleitung ausgestalteten Überlauf (7), der vom Schacht (8) und an der Austrittsöffnung (15) vorbei zu einem Auslass (6) der Rohrsedimentationsanlage (1) verläuft und dort mündet,
wobei der Überlauf (7) oberhalb der Einlassöffnung (11) an den Schacht (8) anschließt.

3. Rohrsedimentationsanlage nach Anspruch 1 oder 2,
**dadurch gekennzeichnet,**
**dass** der Überlauf (7) im Abstand oberhalb von der Einlassöffnung (11) an den Schacht (8) anschließt, und die Klappe (12) zwischen einer abgesenkten Offenstellung und einer angehobenen Schließstellung beweglich ist, und wobei der Schwimmer (14) oberhalb der Klappe (12) und unterhalb der Einlassöffnung (11) angeordnet ist, derart, dass die Klappe (12) bei einem im Schacht (8) ansteigenden Wasserpegel automatisch ihre Schließstellung einnimmt.

4. Rohrsedimentationsanlage nach einem der vorhergehenden Ansprüche,
**dadurch gekennzeichnet,**
**dass** über der Trennwand (10) der Schacht (8) verläuft, derart, dass durch den Schacht (8) ein Eingriff sowohl in die Vorkammer (3) als auch in die Sedimentationskammer (4) ermöglicht ist
und der Strömungskanal von der Vorkammer (3) durch den Schacht (8) und in die Sedimentationskammer (4) verläuft.

5. Rohrsedimentationsanlage nach einem der vorhergehenden Ansprüche,
**dadurch gekennzeichnet,**
**dass** in der Vorkammer (3) ein Ablenkkörper (9) zwischen
dem Rohwassereinlass (5) und dem Strömungskanal angeordnet ist,
wobei der Ablenkkörper (9) im Abstand von dem Rohwassereinlass (5) angeordnet ist
und eine Lenkfläche aufweist, welche einströmendes Rohwasser zu dem Strömungskanal lenkend ausgerichtet ist.

6. Rohrsedimentationsanlage nach einem der vorhergehenden Ansprüche,
**dadurch gekennzeichnet,**
**dass** die Rohrsedimentationsanlage (1) als Einzelschachtanlage ausgestaltet ist, derart, dass sie nur den einen erwähnten Schacht (8) aufweist.

7. Rohrsedimentationsanlage nach einem der vorhergehenden Ansprüche,
**dadurch gekennzeichnet,**
**dass** der Einlassöffnung (11) in Strömungsrichtung ein Laubfanggitter (16) vorgeschaltet ist.

8. Rohrsedimentationsanlage nach einem der vorhergehenden Ansprüche,
**dadurch gekennzeichnet,**
**dass** die Klappe (12) und der Schwimmer (14) Bestandteile eines aus dem Schacht (8) nach oben herausnehmbaren Einsatzes (17) bilden,
wobei der Einsatz (17) einen eine Wartungsöffnung der Sedimentationskammer (4) verschließenden Deckel bildet.

9. Rohrsedimentationsanlage nach Anspruch 8,
**dadurch gekennzeichnet,**
**dass** der Einsatz (17) ein seine stabile Lage sicherstellendes Eigengewicht aufweist, derart, dass der Einsatz unter Verzicht auf Befestigungsmittel als Deckel auf der Wartungsöffnung montierbar ist.

10. Rohrsedimentationsanlage nach Anspruch 8 oder 9,
**dadurch gekennzeichnet,**
**dass** der Einsatz (17) entlang seines Umfangs mit Führungselementen des Schachtes (8) und / oder der Sedimentationskammer (4) zusammenwirkt, die den Einsatz (17) gegen Verschiebungen in einer liegenden Richtung sichern.

11. Rohrsedimentationsanlage nach Anspruch 10,
**dadurch gekennzeichnet,**
**dass** der Einsatz (17) eine gebogen verlaufende Kontur aufweist, mit welcher er innerhalb des Schachtes (8) der Schachtwand anliegt,
und **dass** der Einsatz (17) einen nach unten ragenden Anschlag aufweist, der sich durch die Wartungsöffnung in die Sedimentationskammer (4) erstreckt.

12. Rohrsedimentationsanlage nach einem der vorhergehenden Ansprüche,
**dadurch gekennzeichnet,**
**dass** in der Sedimentationskammer (4) eine Schwallwand angeordnet ist.

## Claims

1. Tube-type sedimentation system (1),
having a shaft (8) that is accessible from above
and having a horizontally arranged sedimentation chamber (4) that is designed in the form of a tube,
an inlet hole (11) that is disposed inside the shaft (8) and and that opens out into the sedimentation chamber (4) near a first end of the sedimentation chamber (4)
and having an outlet hole (15) that is disposed near to a second end of the sedimentation chamber (4) in the upper circumferential half of the sedimentation chamber (4),
**characterised in that** a pre-chamber (3) that incorporates an untreated-water inlet (5) and is separated from the sedimentation chamber (4) by a partition wall (10) is disposed upstream of the sedimentation chamber (4), where a flow channel extends over the partition wall (10) to the inlet hole (11) of the sedimentation chamber (4) and the inlet hole (11) can be optionally closed by means of a flap (12)
and where the flap (12) is provided with a float (14) in such a way that, if the water level rises, the flap (12) automatically takes up its closed position.

2. Tube-type sedimentation system in accordance with claim 1,
**characterised by** an overflow (7) that is designed in the form of a tube and extends from the shaft (8) and past the outlet hole (15) to an outlet (6) of the tube-type sedimentation system (1) and opens out into it,
where the overflow (7) connects to the shaft (8) above the inlet hole (11).

3. Tube-type sedimentation system in accordance with claim 1 or 2,
**characterised in that** the overflow (7) connects to the shaft (8) at a distance above the inlet hole (11) and the flap (12) can be moved between a lowered open position and a raised closed position
and where the float (14) is disposed above the flap (12) and below the inlet hole (11)
in such a way that, if the water level rises in the shaft (8), the flap (12) automatically takes up its closed position.

4. Tube-type sedimentation system in accordance with any one of the foregoing claims,
**characterised in that** the shaft (8) extends above the partition wall (10) in such a way that an intervention both into the pre-chamber (3) and into the sedimentation chamber (4) is enabled through the shaft (8) and the flow channel extends from the pre-chamber (3) through the shaft (8) and into the sedimentation chamber (4).

5. Tube-type sedimentation system in accordance with any one of the foregoing claims, **characterised in**
**that** a deflecting element (9) is disposed in the pre-chamber (3) between the untreated-water inlet (5) and the flow channel,
where the deflecting element (9) is disposed at a distance from the untreated-water inlet (5)
and incorporates a guide surface that is aligned so as to guide inflowing untreated-water to the flow channel.

6. Tube-type sedimentation system in accordance with any one of the foregoing claims,
**characterised in that** the tube-type sedimentation system (1) is designed as a single-shaft system,
in such a way that it incorporates only the one aforementioned shaft (8).

7. Tube-type sedimentation system in accordance with any one of the foregoing claims,
**characterised in that** a leaf guard (16) is disposed upstream of the inlet hole (11).

8. Tube-type sedimentation system in accordance with any one of the foregoing claims,
**characterised in that** the flap (12) and the float (14) form integral parts of an insert element (17) that can be lifted upwards out of the shaft (8), where the insert element (17) forms a lid to close a maintenance hole of the sedimentation chamber (4).

9. Tube-type sedimentation system in accordance with claim 8,
**characterised in that** the insert element (17) is in itself heavy enough to ensure its stable position so that the insert element can be fitted over the maintenance hole as a cover without the use of fastening means.

10. Tube-type sedimentation system in accordance with claim 8 or 9,
**characterised in that** the insert element (17) interacts around its circumference with guide elements of the shaft (8) and/or the sedimentation chamber (4) to secure the insert element (17) against displacement in a horizontal direction.

11. Tube-type sedimentation system in accordance with claim 10,
**characterised in that** the insert element (17) incorporates a curved contour by which it rests against the shaft wall inside the shaft (8) and that the insert element (17) incorporates a stop that projects downwards and extends into the sedimentation chamber (4) through the maintenance hole.

12. Tube-type sedimentation system in accordance with any one of the foregoing claims,
**characterised in that** a surge plate is disposed inside the sedimentation chamber (4).

## Revendications

1. Installation de sédimentation tubulaire (1),
comprenant un puits (8) accessible par le haut,
et une chambre de sédimentation (4) disposée à l'horizontale et configurée en forme de tube,
un orifice d'admission (11) qui, dans le puits (8), aboutit dans la chambre de sédimentation (4) à proximité d'une première extrémité de cette dernière, un orifice de sortie (15) disposé près d'une deuxième extrémité de la chambre de sédimentation (4), dans sa moitié circonférentielle supérieure, **caractérisée en ce**
**qu'**une préchambre (3) précède la chambre de sédimentation (4), préchambre qui présente une admission (5) d'eau brute et qui est séparée de la chambre de sédimentation (4) par une cloison séparatrice (10), sachant qu'un conduit d'écoulement se dirige via la cloison séparatrice (10) vers l'orifice d'admission (11) de la chambre de sédimentation (4) et que l'orifice d'admission (11) est obturable en option avec un clapet (12), et sachant que le clapet (12) est muni d'un flotteur (14),
de sorte que le clapet se met automatiquement en position de fermeture lorsque le niveau de l'eau monte.

2. Installation de sédimentation tubulaire selon la revendication 1, **caractérisée par** un dispositif de trop-plein (7) configuré comme conduite tubulaire partant du puits (8) et longeant l'orifice de sortie (15) en direction d'une sortie (6) de l'installation de sédimentation tubulaire (1) et y aboutissant,
sachant que le dispositif de trop-plein (7) se raccorde au puits (8) en amont de l'orifice d'admission (11).

3. Installation de sédimentation tubulaire selon la revendication 1 ou 2, **caractérisée en ce**
**que** le dispositif de trop-plein (7) se raccorde au puits (8) à une certaine distance en amont de l'orifice d'admission (11),
et **que** le clapet (12) est déplaçable entre une position ouverte abaissée et une position fermée relevée,
et sachant que le flotteur (14) est disposé en amont du clapet (12) et en aval de l'orifice d'admission (11),
de sorte que le clapet (12) se met automatiquement sur sa position fermée lorsque le niveau d'eau monte dans le puits (8).

4. Installation de sédimentation tubulaire selon l'une des revendications précédentes,
**caractérisée en ce**
**que** le puits (8) présente un tracé passant au-dessus de la cloison séparatrice (10) de sorte à rendre possible, à travers le puits (8), une intervention aussi bien dans la préchambre (3) que dans la chambre de sédimentation (4)
et **que** le conduit d'écoulement partant de la préchambre (3) traverse le puits (8) pour gagner la chambre de sédimentation (4).

5. Installation de sédimentation tubulaire selon l'une des revendications précédentes,
**caractérisée en ce**
**que** dans la préchambre (3) est disposé un déflecteur (9) entre l'admission d'eau brute (5) et le conduit d'écoulement,
sachant que le déflecteur (9) est disposé à distance de l'admission d'eau brute (5)
et présente une surface directrice orientée de sorte à guider l'eau brute qui afflue vers le conduit d'écoulement.

6. Installation de sédimentation tubulaire selon l'une des revendications précédentes, **caractérisée en ce**
**que** l'installation de sédimentation tubulaire (1) est configurée en installation mono-puits,
de sorte qu'elle ne présente que le puits (8) mentionné.

7. Installation de sédimentation tubulaire selon l'une des revendications précédentes,
**caractérisée en ce**
**qu'**en amont de l'orifice d'admission (11) est intercalée, observée dans le sens de l'écoulement, une grille interceptrice des feuilles mortes (16).

8. Installation de sédimentation tubulaire selon l'une des revendications précédentes,
**caractérisée en ce**
**que** le clapet (12) et le flotteur (14) sont des pièces constitutives d'un insert (17) qu'il est possible d'extraire du puits (8) par le haut,
sachant que l'insert (17) forme un couvercle obturant un orifice de maintenance de la chambre de sédimentation (4).

9. Installation de sédimentation tubulaire selon la revendication 8,
**caractérisée en ce**
**que** l'insert (17) présente un poids propre assurant la stabilité de sa position,
de sorte que l'insert peut être monté comme couvercle sur l'orifice de maintenance en renonçant à des moyens de fixation.

10. Installation de sédimentation tubulaire selon la revendication 8 ou 9,
**caractérisée en ce**
**que** l'insert (17) interagit le long de sa circonférence avec des éléments de guidage du puits (8) et/ou de la chambre de sédimentation (4) qui sécurisent l'insert (17) en empêchant des décalages dans une direction horizontale.

11. Installation de sédimentation tubulaire selon la revendication 10,
**caractérisée en ce**
**que** l'insert (17) présente un contour au tracé incurvé lui permettant d'appliquer contre la paroi du puits à l'intérieur du puits (8),
et **que** l'insert (17) présente une butée faisant saillie vers le bas et qui, traversant l'orifice de maintenance, s'étend dans la chambre de sédimentation (4).

12. Installation de sédimentation tubulaire selon l'une des revendications précédentes,
**caractérisée en ce**
**que** dans la chambre de sédimentation (4) est disposée une paroi antibruit.
